# FASCICULE DE BREVET EUROPEEN

(11) **EP 4 153 501 B1**
(45) Date de publication et mention de la délivrance du brevet: **10.07.2024**
(21) Numéro de dépôt: 21732404.5
(22) Date de dépôt: 29.04.2021
(51) Int. Cl.: B65D 51/20, B65D 77/20

(54) **JOINT DOUBLE PIECE COMPRENANT UN OPERCULE A BASE DE CASEINE ET OPERCULE A BASE DE CASEINE**
ZWEITEILIGE DICHTUNG MIT EINEM CASEINBASIERTEN DECKEL UND CASEINBASIERTER DECKEL
TWO-PART SEAL COMPRISING A CASEIN-BASED LID AND CASEIN-BASED LID

(30) Priorité: 19.05.2020 FR 2005068
(43) Date de publication de la demande: 29.03.2023
(60) Demande divisionnaire: 24179190.4
(73) Titulaire: SELIG FRANCE, 69380 Chazay D'Azergues (FR)
(72) Inventeur: TRIQUET, Stéphane, 69130 ECULLY (FR)
(74) Mandataire: Gill Jennings & Every LLP
(86) Numéro de dépôt international: PCT/FR2021/050744
(87) Numéro de publication internationale: WO 2021/234236

(56) Documents cités:
- EP-A1- 0 668 221
- EP-A1- 2 279 962
- FR-A- 841 136
- FR-A1- 2 943 322

## Description

L'invention se rattache au secteur technique des moyens d'obturation d'un récipient à fermeture par bouchon ou capsule, en particulier dans le domaine des produits alimentaires secs tels que cafés lyophilisés .... sans que ce soit limitatif. Elle concerne plus précisément un joint double pièce comprenant un support rendu solidaire d'un opercule.

L'étanchéité des récipients à fermeture par bouchon ou capsule, préalablement à leur première ouverture, peut être effectuée au moyen d'un joint double pièce ou, dans certains cas, d'un simple opercule qui peut être collable ou scellable, sur le buvant.

Il existe par ailleurs des joints mono-pièce constitués d'un support moussé ou non. Lorsqu'il s'agit d'une mousse, il s'agit de mousses de polypropylène (PP), de polyéthylène (PE) ou de polyéthylène téréphtalate (PET), éventuellement contrecollées avec des films de PP, PE ou polyéthylène téréphtalate (PET). Ces joints ont pour fonction d'assurer l'étanchéité des emballages vis-à-vis tout d'abord du contenu, liquide ou non, mais également vis-à-vis de l'oxygène, ainsi que vis-à-vis des arômes et odeurs.

Ces joints sont en général livrés au fabriquant de capsule ou de bouchon. Le fabriquant les insère au fond de la capsule ou du bouchon et les livre au client final. Celui-ci, remplit les contenants (flacon, bouteille, pot...) qu'il vient ensuite obturer par le biais de la capsule ou du bouchon muni de son joint. Ces joints n'ont pas vocation à être scellé ou collé sur le buvant et ne sont pas concernés par l'invention.

Un joint double pièce est constitué d'un opercule mis en place sur tout le pourtour du rebord supérieur du col du récipient ou buvant, isolant de la sorte le récipient de l'extérieur, et d'autre part, d'un support généralement plus épais, inséré, sans être pour autant fixé, au fond du bouchon. Préalablement à la première ouverture du récipient, le support et l'opercule peuvent être solidarisés par le biais d'un adhésif temporaire.

Le rôle de l'opercule est tout d'abord de conférer une inviolabilité du récipient avant la première ouverture. En outre, il assure l'étanchéité primaire vis-à-vis de l'extérieur. De plus, il doit développer certaines propriétés de compatibilité avec le contenu qu'il est sensé isoler et par exemple être de qualité alimentaire dès que le contenu est lui-même alimentaire.

Le support, quant à lui, est destiné à absorber les tolérances entre le fond de la capsule et/ou du bouchon et la partie supérieure du col du récipient, et en outre, à assurer l'étanchéité secondaire dès lors que l'opercule a été en tout ou partie retiré. Il est donc susceptible d'assurer une certaine compression avec effet mémoire pour justement permettre d'absorber ces tolérances.

En pratique, le joint est inséré au fond de la capsule ou du bouchon. Une fois le récipient rempli, on vient visser ou clipser le bouchon ou la capsule munie du joint sur le récipient. La partie opercule du joint se trouve alors au contact du buvant.

Lorsque que l'on procède pour la première fois à l'ouverture du récipient, le support inséré au fond du bouchon se désolidarise de l'opercule resté scellé sur le buvant. Ce n'est qu'ensuite que l'opercule est retiré par le consommateur, l'étanchéité, en position fermée du récipient, n'étant plus alors assurée que par la partie support du joint venant plaquer par compression sur le buvant.

Le scellage de l'opercule sur le buvant est effectué par collage ou thermoscellage par induction au moyen d'un film ou d'un vernis thermoscellant.

Dans le cas du collage, celui-ci est effectué classiquement par le biais d'une colle compatible avec le buvant et la face inférieure de l'opercule. Pour permettre l'adsorption de l'eau contenue dans la colle, l'opercule contient en général au moins une couche en papier, ce qui nécessite la présence d'un élément supplémentaire, qui impacte le coût de production. En outre et surtout, il existe toujours un risque que la colle, laquelle est appliquée sur le buvant du pot, pénètre dans le contenant bien qu'il s'agisse d'une colle alimentaire.

Dans le cas du thermoscellage, celui-ci est rendu possible par l'action combinée d'un matériau conducteur, inséré dans l'épaisseur du joint, qui, sous l'effet d'une induction électrique s'échauffe, entrainant le ramollissement du film ou du vernis de scellage sur le buvant. Le matériau conducteur peut être inséré soit dans le support, soit dans l'opercule. Le plus souvent, il est inséré dans l'épaisseur de l'opercule. En pratique, il a une épaisseur d'au moins 12 micromètres pour assurer la conduction de la chaleur.

Le film ou vernis thermoscellant est réalisé en un matériau du type polyoléfine, choisi dans le groupe comprenant l'EVA, le polyéthylène, le polypropylène ou PET, du type holt melt ou encore du type terpolymère ou ionomère. De manière générale, le matériau constitutif du film thermoscellant est choisi en fonction de la nature du pot. Le film thermoscellant peut être un film monocouche appliqué sur la face inférieure de l'opercule par extrusion. Il peut également s'agir d'un film bicouche (une couche inférieure thermoscellante proprement dite et une couche supérieure liante) appliqué sur la face inférieure de l'opercule par co extrusion.

Les documents EP 2 045 194 A1 et WO 2010/115811 décrivent des joints double pièces dont la partie opercule intègre une feuille d'aluminium comme matériau conducteur.

L'inconvénient de l'art antérieur réside principalement dans le fait que la couche de matériau conducteur, nécessaire au thermoscellage, complique le recyclage de l'opercule en raison de son épaisseur importante et donc de la quantité de métal nécessaire. En effet, lors du processus de recyclage, le matériau conducteur nécessite d'être séparé des autres composants de l'opercule et de la capsule ou du bouchon étant donné leur composition différente. Cela implique ainsi des coûts substantiels de traitement des opercules ainsi qu'une durée de recyclage conséquente.

Dans certains cas, en particulier pour certains produits ou marchés, la présence du support n'est pas nécessaire, de sorte que le seul opercule est utilisé. C'est notamment le cas pour les capsules dites « capsules de service » pour lesquelles la présence d'un support est incompatible avec la forme de la capsule. C'est également parfois le cas pour les pays en voie de développement ou le prix a un fort impact. Dans ces conditions, même si l'étanchéité n'est pas optimale, l'obturation par un simple opercule reste suffisante.

Le document EP 2279962 A1 divulgue un procédé de scellage d'un opercule sur un récipient en verre. L'objectif est d'améliorer l'étanchéité du scellage du fait notamment de l'imperfection du buvant en verre et d'améliorer la force de scellage. Pour ce faire, le buvant est traité avec une solution à base de caséine avant d'appliquer une couche d'aluminium recouverte d'un film de scellage. La solution proposée, si elle permet de résoudre les problème d'étanchéité, ne résout pas le problème du recyclage.

Le document FR 841 136 A décrit un joint double pièce selon le préambule de la revendication indépendante 1, comprenant un papier cristal destiné à boucher les pots de confiture et ce, sans qu'il ne soit envisagé de recouvrir le papier cristal au moyen d'une bouchon ou capsule. Il est indiqué que le consommateur vient appliquer une couche à base de caséine sur le papier cristal par trempage dans du lait pour faire en sorte de faire adhérer ledit papier sur le buvant du pot.

Le premier problème que se propose de résoudre l'invention est celui de mettre au point un joint ou un opercule qui soit scellable sur le buvant d'un récipient sans nécessiter d'échauffement ou de colle, qui même si elles sont aptes au contact alimentaire dans le cadre législatif actuel pourraient être remises en cause par la suite au gré des révisions des réglementations.

Le second problème que se propose de résoudre l'invention est de faire en sorte que les capsules, bouchons, joints et opercules soient recyclables selon un circuit commun, c'est-à-dire qu'ils puissent être recyclés ensemble, sans nécessiter de séparer le bouchon de l'opercule ou du joint et ensuite chacun des éléments constitutifs des opercules et joints.

Le troisième problème que se propose de résoudre l'invention est celui de proposer des joints ou opercules qui soient en partie biodégradables.

A cet effet, il a été mis au point un joint double pièce selon la revendication indépendante 1.

Dans la suite de la description, le film à base de caséine et/ou caséinate est désigné « film caséine ».

Par caséinate, on entend principalement les sels de sodium, potassium, calcium ou magnésium de la caséine et leurs mélanges. Contrairement aux caséines qui sont hydrophobes, les caséinates sont hydrophiles et donc solubles dans l'eau.

La caséine est une protéine du lait peu soluble dans l'eau. Elle est avantageusement obtenue soit par une acidification (caséine acide), soit par une attaque enzymatique (caséine présure). Dans le cadre de l'invention, les caséines et les caséinates sont des protéines animales issues du lait. On entend donc par matière protéinique du lait essentiellement les caséines, les caséinates et leurs mélanges.

Le Demandeur a eu l'idée d'appliquer les films caséine utilisés classiquement dans le domaine de l'emballage au domaine des opercules utilisés dans les capsules ou bouchons afin de résoudre les problèmes précédemment évoqués.

Plus précisément, le Demandeur a constaté que le film caséine présentait le triple avantage au moins :
- d'être scellable à lui seul ce qui signifie qu'il peut être scellé sur le buvant d'un récipient à température ambiante sans nécessiter l'adjonction d'une colle ou la présence d'un matériau conducteur dont l'épaisseur incompatible avec un circuit de recyclage optimal,
- d'être biodégradable.

Plus précisément, lorsque la couche métallique est présente, elle a une épaisseur telle qu'elle ne peut remplir une fonction de thermoinduction. En pratique, elle a une épaisseur inférieure à 12 micromètre, de préférence inférieure à 10 micromètres, en pratique de quelques angstroems seulement. Dans ces conditions, la couche métallique n'a qu'une fonction barrière. Elle présente également l'avantage de maintenir un aspect métallisé de l'opercule pour le consommateur.

Dans un mode de réalisation particulier, l'opercule est totalement dépourvu de couche métallique.

Comme mentionné, le film peut contenir de la caseine, de la caseinate ou un mélange des deux.

En pratique, le film comprend :
- au moins un caséinate et/ ou au moins une caséine, dont le poids représente de 40 à 90 % du poids du film, plus avantageusement de 50 à 85 % et encore plus avantageusement de 60 à 70%
- au moins un agent plastifiant, dont le poids représente de 5 à 50 % du poids du film, plus avantageusement, de 10 à 40 % et encore plus préférentiellement de 15 à 25 %.

Avantageusement, le rapport en poids entre la caséine et le caséinate est compris entre 5/95 et 95/5, de préférence entre 20/80 et 80/20 et de manière encore plus préférentielle, entre 40/60 et 60/40.

En pratique, l'agent plastifiant peut-être choisi dans le groupe comprenant l'eau, le glycérol, le sorbitol, le mannitol, le maltitol, l'éthylène glycol et leurs mélanges.

Dans un mode de réalisation préféré, le film est un film extrudé. Dans un autre mode de réalisation, le film est obtenu par enduction, puis séchage du film ainsi enduit.

Préférentiellement, l'agent plastifiant est de l'eau et/ou du glycérol.

La scellabilité du film est conférée par le caractère hydrosoluble de la caséine qui engendre un effet collant du film. En d'autres termes, le film peut être collé directement sur le buvant, en humidifiant simplement la zone à coller au moyen d'une solution aqueuse.

Dans un mode de réalisation particulier, pas selon l'invention, l'opercule est constitué uniquement du film à base de caséine et/ou caséinate, avantageusement un film extrudé.

Pour renforcer les caractéristiques mécaniques du film, l'opercule comprend en outre un film de renfort.

Le film de renfort est avantageusement appliqué sur toute la surface du film caséine, afin de pallier à une éventuelle fragilité mécanique de celui-ci. Le film de renfort peut aussi servir de support à l'impression. Logiquement, le film de renfort est appliqué sur la face du film caséine opposée à celle en regard du buvant. Le film de renfort est en pratique rendu solidaire du film caséine soit par humidification du film de renfort ou du film caséine au moyen d'une solution aqueuse, soit par le biais d'un liant tel que par exemple une colle bicomposant isocyanate - hydroxyle.

De manière préférentielle, le film de renfort est réalisé en un matériau avantageusement choisi dans le groupe comprenant le polyester (PET), le polypropylène bi-orienté, le polyamide bi-orienté et le PET bi-orienté, polyester, PE (polyéthylène). Son épaisseur est avantageusement comprise entre 5 et 100 µm, avantageusement entre 4 et 40 µm. Dans certains cas, le film de renfort peut être métallisé sans pour autant lui conférer des caractéristiques de thermoinduction. Seule, la fonction barrière est recherchée.

L'opercule a en pratique, une épaisseur comprise entre 20 et 200 µm, de préférence comprise entre 30 et 120 µm.

Dans un mode de réalisation perfectionné, l'opercule comprend une languette agencée dans le prolongement du film de renfort et/ou du film caséine.

Celle-ci a pour objectif de faciliter l'arrachage de l'opercule.

L'invention concerne un joint double pièce comprenant un support rendu solidaire d'un opercule tel que décrit ci-avant au moyen d'un adhésif temporaire.

Le support peut être réalisé en tout type de matériau compressible avec mémoire de reprise, notamment en polyéthylène expansé ou en polypropylène expansé, éventuellement muni sur au moins une de ses deux faces, d'un film de polypropylène ou polyéthylène pour lui conférer une certaine rigidité. Il peut également être réalisé en papier ou carton. En pratique, les supports envisagés ont une épaisseur comprise entre 0,5 et 4 mm, avantageusement entre 0,8 et 2 mm.

S'agissant de la solidarisation temporaire entre le support et l'opercule, celle-ci peut être obtenue au moyen d'un adhésif temporaire appliqué sous forme d'un film, de préférence extrudé ou co-extrudé, chacune des deux faces de la couche ayant un pouvoir collant différent, la face la plus collante étant appliquée sur la surface inférieure du support, tandis que la face la moins collante est appliquée sur la face supérieure de l'opercule. En pratique, un tel film est à base de polymère, en général synthétique, et choisi judicieusement par l'homme du métier, de manière à obtenir les propriétés recherchées de collage différentiel. De tels polymères sont par exemple des polymères ou co-polymères à base d'acétate, d'acrylate, de polyéthylène ... L'adhésif temporaire peut également se présenter sous la forme d'une couche de cire.

Le joint double pièce de l'invention est plus particulièrement adapté pour l'obturation d'un récipient à fermeture par bouchon ou capsule contenant des produits secs.
[Fig. 1] la figure 1 est une représentation schématique illustrant un récipient scellé avec un opercule, où l'opercule ne comprend que le film caséine.
[Fig. 2] la figure 2 est une représentation schématique similaire à celle de la figure 1, où l'opercule comprend le film caséine et un film de renfort.
[Fig. 3] la figure 3 est une représentation schématique similaire à celle de la figure 1, si ce n'est que le récipient est scellé avec un joint double pièce selon l'invention.
[Fig. 4] la figure 4 est une représentation schématique similaire à celle de la figure 2, où un joint d'étanchéité est apposé sur l'opercule.

On réalise un film ayant la composition suivante en % en poids :
- caséine : 50
- caseinate : 5.5
- glycérol : 20
- eau 24.5

Le film peut être fabriqué par tout moyen connu, en particulier par extrusion, avantageusement extrusion-gonflage.

L'opercule est destiné à la fermeture de récipient tel que bouteilles ou pots par bouchon ou capsule. Dans les exemples qui suivent, le pot (1) est destiné à être refermé avec un bouchon (8).

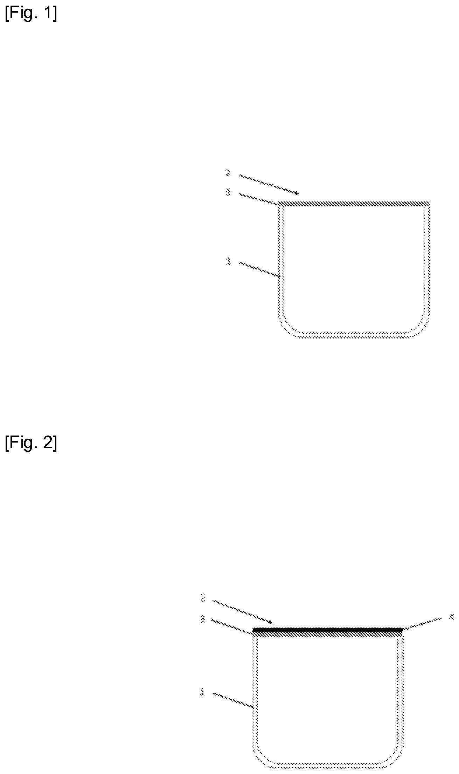

En référence à la figure 1, un pot (1) est représenté scellé avec un opercule (2). L'opercule (2) comprend, dans cette première variante, uniquement un film à base de caséine (3) décrit ci-dessus disposé en regard du buvant du pot.

Le film est scellé en humidifiant le buvant du pot puis en appliquant le film à base de caséine directement sur le buvant du pot.

Selon une deuxième variante, illustrée par la figure 2, l'opercule (2) comprend le film à base de caséine (3) et un film de renfort (4).

Le film de renfort (4) est dans cet exemple fabriqué en PET bi-orienté. Son épaisseur est de 35 µm.

Le film à base de caséine (3) et le film de renfort (4) se recouvrent sur toute leur surface, l'opercule (2) étant positionné sur le buvant du pot (1) de telle sorte à ce que le film à base de caséine (3) soit en regard du buvant du pot (1).

Toujours selon la figure 2, le film à base de caséine (3) et le film de renfort (4) sont solidarisés par mouillage du film à base de caséine.

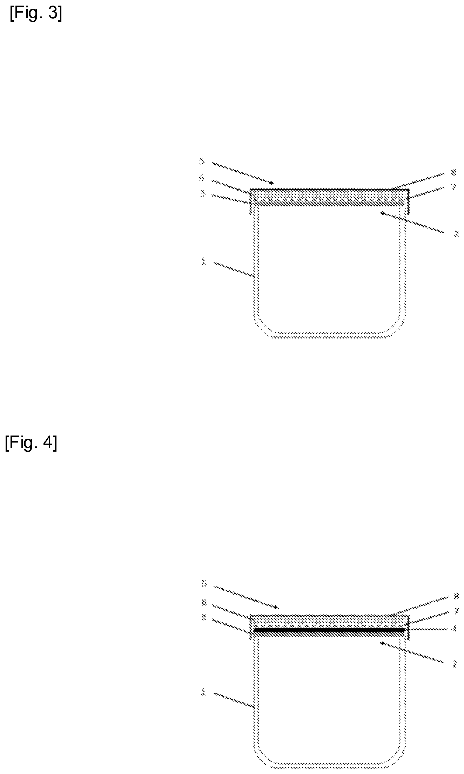

En référence aux figures 3 et 4, l'opercule (2) est solidarisé à un joint d'étanchéité (5), grâce à un adhésif temporaire.

Le film adhésif (7) permettant l'adhérence temporaire entre la couche support (6) du joint d'étanchéité (5) et l'opercule (2) est choisi de telle sorte que la force d'assemblage entre la couche support (6) et l'opercule (2) soit inférieure à la fois à la force de résistance du film à base de caséine (3) (désignée également force de cohérence) et à la force de collage du film à base de caséine (3) sur le buvant du récipient (1).

Le film adhésif (7) se présente sous la forme d'un film coextrudé, dont chacune des deux faces à un pouvoir collant différent, la face la plus collante étant appliquée sur la surface supérieure de l'opercule (2) tandis que la face la moins collante est appliquée sur la face inférieure de la couche support (6). En pratique, ce film adhésif (7) est un polymère à base d'acrylate et de polyéthylène.

Le pourtour interne du bouchon (8) présente en outre un jonc (non représenté) permettant de maintenir la couche support (6) au fond du bouchon (8) après ouverture. Au moment de la première ouverture du récipient (1), le retrait du bouchon (8) entraîne la séparation de la couche support (6) (qui reste alors dans le fond du bouchon (8) grâce à la présence du jonc agencé sur le pourtour interne dudit bouchon (8)) par rapport à l'opercule (2) qui reste sur le buvant du récipient (1). Le bouchon (8) est réalisé en tout matériau approprié, préférentiellement en polymère.

La couche support (6) peut être réalisée en tout type de matériau compressible avec mémoire de reprise, notamment en polyéthylène expansé ou en polypropylène expansé, éventuellement muni sur au moins une de ses deux faces, d'un film de polypropylène ou polyéthylène pour lui conférer une certaine rigidité. En pratique, la couche support (6) présente une épaisseur de 2 mm.

La figure 3 représente la couche support (6) solidarisée avec la face supérieure du film à base de caséine (3) qui constitue à lui seul l'opercule (2), tandis que la figure 4 représente la couche support (6) solidarisée avec la face supérieure du film de renfort (4) ; l'opercule (2) étant cette fois-ci composé du film de renfort (4) et du film à base de caséine (3).

En référence aux figures 1 à 4, le film à base de caséine (3) présente une épaisseur de 50 µm. Le film de renfort (4) présente quant à lui une épaisseur de 35 µm.

L'invention et les avantages qui en découlent ressortent bien de la description qui précède.

On note en particulier la possibilité de substituer la colle ou la majeure partie du métal par de la caséine, permettant respectivement d'anticiper d'éventuels problèmes règlementaires liés à l'utilisation de colle et de recycler dans un même circuit l'ensemble des éléments constituant le bouchon ou capsule, ainsi que le joint d'étanchéité et l'opercule.

## Revendications

1. Joint double pièce comprenant un support (6) rendu solidaire d'un opercule (2) pour l'obturation d'un récipient à fermeture par bouchon ou capsule, l'opercule (2) comprenant un film à base de caséine (3) et/ou caséinate destiné à être en contact avec le buvant dudit récipient,
**caractérisé en ce que** le support (6) est rendu solidaire de l'opercule (2) au moyen d'un adhésif temporaire.

2. Joint selon la revendication 1, **caractérisé en ce que** l'opercule (2) comprend en outre un film de renfort (4).

3. Joint selon la revendication 2, **caractérisé en ce que** le film de renfort (4) est appliqué sur la face du film caséine (3) opposée à celle en regard du buvant.

4. Joint selon l'une des revendications 2 ou 3, **caractérisé en ce que** le film de renfort (4) est réalisé en un matériau choisi dans le groupe comprenant le polyester (PET), le polypropylène bi-orienté, le polyamide bi-orienté et le PET bi-orienté.

5. Joint selon l'une des revendications précédentes, **caractérisé en ce que** l'opercule (2) comprend une languette agencée dans le prolongement du film de renfort (4) et/ou du film à base de caséine (3) et/ou caséinate

6. Joint selon l'une des revendications précédentes, **caractérisé en ce que** le film à base de caséine (3) et/ou caséinate comprend :
- au moins un caséinate et/ ou au moins une caséine, dont le poids représente de 40 à 90 % du poids du film, plus avantageusement de 50 à 85 % et encore plus avantageusement de 60 à 70%
- au moins un agent plastifiant, dont le poids représente de 5 à 50 % du poids du film, plus avantageusement, de 10 à 40 % et encore plus préférentiellement de 15 à 25 %.

7. Joint selon la revendication 6, **caractérisé en ce que** l'agent plastifiant est choisi dans le groupe comprenant l'eau, le glycérol, le sorbitol, le mannitol, le maltitol, l'éthylène glycol et leurs mélanges.

8. Joint selon l'une des revendications précédentes, **caractérisé en ce que** le support (6) est réalisé en un matériau compressible avec mémoire de reprise, notamment en polyéthylène expansé ou en polypropylène expansé.

9. Utilisation du joint selon l'une des revendications 1 à 8 pour le scellage de récipient contenant des produits secs.

## Patentansprüche

1. Zweiteilige Dichtung, umfassend einen Träger (6), der mit einem Deckel (2) zum Verschließen eines Behälters mit einem Stopfen- oder Kapselverschluss fest verbunden ist, wobei der Deckel (2) eine Folie (3) auf Basis von Casein und/oder Caseinat umfasst, die dazu bestimmt ist, in Kontakt mit der Mündungslippe des Behälters vorzuliegen,
**dadurch gekennzeichnet, dass** der Träger (6) mit dem Deckel (2) mittels eines provisorischen Klebstoffs fest verbunden ist.

2. Dichtung nach Anspruch 1, **dadurch gekennzeichnet, dass** der Deckel (2) weiter eine Verstärkungsfolie (4) umfasst.

3. Dichtung nach Anspruch (2), **dadurch gekennzeichnet, dass** die Verstärkungsfolie (4) auf die Fläche der Caseinfolie (3) aufgebracht wird, die jener neben der Mündungslippe gegenüberliegt.

4. Dichtung nach einem der Ansprüche 2 oder 3, **dadurch gekennzeichnet, dass** die Verstärkungsfolie (4) aus einem Material hergestellt ist, ausgewählt aus der Gruppe umfassend Polyester (PET), biorientiertes Polypropylen, biorientiertes Polyamid und biorientiertes PET.

5. Dichtung nach einem der vorstehenden Ansprüche, **dadurch gekennzeichnet, dass** der Deckel (2) eine in der Verlängerung der Verstärkungsfolie (4) und/oder der Folie (3) auf Basis von Casein und/oder Caseinat angeordnete Lasche umfasst.

6. Dichtung nach einem der vorstehenden Ansprüche, **dadurch gekennzeichnet, dass** die Folie (3) auf Basis von Casein und/oder Caseinat umfasst:
- mindestens ein Caseinat und/oder mindestens ein Casein, von dem das Gewicht 40 bis 90 Gewichts-% der Folie darstellt, vorteilhafter von 50 bis 85 Gewichts-% und noch vorteilhafter von 60 bis 70 Gewichts-%.
- mindestens einen Weichmacher, von dem das Gewicht von 5 bis 50 Gewichts-% der Folie darstellt, vorteilhafter von 10 bis 40 Gewichts-% und noch bevorzugter 15 bis 25 Gewichts-%.

7. Dichtung nach Anspruch 6, **dadurch gekennzeichnet, dass** der Weichmacher ausgewählt ist aus der Gruppe, umfassend Wasser, Glycerin, Sorbitol, Mannitol, Maltitol, Ethylenglykol und Mischungen davon.

8. Dichtung nach einem der vorstehenden Ansprüche, **dadurch gekennzeichnet, dass** der Träger (6) aus einem komprimierbaren Material mit Formgedächtnis hergestellt ist, insbesondere aus expandiertem Polyethylen oder aus expandiertem Polypropylen.

9. Verwendung der Dichtung nach einem der Ansprüche 1 bis 8 zur Versiegelung eines Behälters, der trockene Produkte enthält.

## Claims

1. Two-part seal comprising a substrate (6) affixed to a lid (2) for sealing a container closed by a stopper or cap, the lid (2) comprising a casein-based and/or caseinate-based film (3) intended to be in contact with the mouth of said container,
**characterised in that** the substrate (6) is affixed to the lid (2) by means of a temporary adhesive.

2. Seal according to claim 1, **characterised in that** the lid (2) further comprises a reinforcing film (4).

3. Seal according to claim 2, **characterised in that** the reinforcing film (4) is applied to the face of the casein film (3) opposite the face facing the mouth.

4. Seal according to any one of claims 2 or 3, **characterised in that** the reinforcing film (4) is made of a material selected from the group comprising polyester (PET), biaxially oriented polypropylene, biaxially oriented polyamide and biaxially oriented PET.

5. Seal according to any one of the preceding claims, **characterised in that** the lid (2) comprises a tab arranged as an extension of the reinforcing film (4) and/or of the casein-based and/or caseinate-based film (3).

6. Seal according to any one of the preceding claims, **characterised in that** the casein-based and/or caseinate-based film (3) comprises:
- at least one caseinate and/or at least one casein, the weight of which represents from 40 to 90% of the weight of the film, more advantageously from 50 to 85% and even more advantageously from 60 to 70%
- at least one plasticiser, the weight of which represents from 5 to 50% of the weight of the film, more advantageously from 10 to 40% and even more advantageously from 15 to 25%.

7. Seal according to claim 6, **characterised in that** the plasticiser is selected from the group comprising water, glycerol, sorbitol, mannitol, maltitol, ethylene glycol and mixtures thereof.

8. Seal according to any one of the preceding claims, **characterised in that** the substrate (6) is made of a compressible material with recovery memory, in particular expanded polyethylene or expanded polypropylene.

9. Use of the seal according to any one of claims 1 to 8 for sealing containers containing dry products.
